(19) Europäisches Patentamt / European Patent Office / Office européen des brevets

(11) **EP 3 488 380 B1**

(12) **FASCICULE DE BREVET EUROPEEN**

(45) Date de publication et mention de la délivrance du brevet:
**25.10.2023 Bulletin 2023/43**

(21) Numéro de dépôt: **17748676.8**

(22) Date de dépôt: **19.07.2017**

(51) Classification Internationale des Brevets (IPC):
**G06V 20/56** *(2022.01)*

(52) Classification Coopérative des Brevets (CPC):
**G06V 20/56**

(86) Numéro de dépôt international:
**PCT/EP2017/068250**

(87) Numéro de publication internationale:
**WO 2018/015446 (25.01.2018 Gazette 2018/04)**

(54) **PROCÉDÉ DE DÉTERMINATION D'UN NIVEAU D'ÉBLOUISSEMENT D'UN CONDUCTEUR DE VÉHICULE AUTOMOBILE**

VERFAHREN ZUM BESTIMMEN EINER BLENDUNGSHÖHE FÜR EINEN KRAFTFAHRZEUGFÜHRER

METHOD FOR DETERMINING A GLARE LEVEL FOR A MOTOR VEHICLE DRIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2016 FR 1656875**

(43) Date de publication de la demande:
**29.05.2019 Bulletin 2019/22**

(73) Titulaire: **Valeo Schalter und Sensoren GmbH 74321 Bietigheim-Bissingen (DE)**

(72) Inventeurs:
- **AHIAD, Samia**
  **94046 Créteil Cedex (FR)**
- **BELKARFA, Salim**
  **94046 Créteil Cedex (FR)**
- **CHACON ALAM, Ashley**
  **94046 Créteil Cedex (FR)**
- **GARNIER, Denis**
  **94046 Créteil Cedex (FR)**
- **BEEV, Kostadin**
  **94046 Créteil Cedex (FR)**

(74) Mandataire: **Claassen, Maarten Pieter et al Valeo Schalter und Sensoren GmbH CDA-IP Laiernstraße 12 74321 Bietigheim-Bissingen (DE)**

(56) Documents cités:
EP-A1- 2 479 064     EP-A1- 2 743 129
FR-A1- 3 010 940     US-A- 5 426 294

- YANDAN LIN ET AL: "Model predicting discomfort glare caused by LED road lights", OPTICS EXPRESS, vol. 22, no. 15, 18 juillet 2014 (2014-07-18), pages 18056-18071, XP055351648, DOI: 10.1364/OE.22.018056
- Kent B Christianson ET AL: "Methods to Address Headlight Glare", UCB-ITS-PRR-2009-20, 1 mars 2009 (2009-03-01), pages 1-175, XP055351700, Extrait de l'Internet: URL:http://www.its.berkeley.edu/sites/defa ult/files/publications/UCB/2009/PRR/UCB-IT S-PRR-2009-20.pdf [extrait le 2017-03-06]

**Description**

DOMAINE TECHNIQUE AUQUEL SE RAPPORTE L'INVENTION

La présente invention concerne de manière générale les aides à la conduite de véhicules automobiles.

Elle concerne plus particulièrement un procédé de détermination d'un niveau d'éblouissement d'un conducteur de véhicule automobile, cet éblouissement étant provoqué par une source de lumière illuminant le conducteur. Ce procédé comporte des étapes :

-    d'acquisition d'une image par un capteur d'images, sur laquelle apparaît au moins une partie de ladite source de lumière,
-    d'estimation d'une distance séparant le véhicule automobile de ladite source de lumière, et
-    de calcul dudit niveau d'éblouissement en fonction de ladite distance.

ARRIERE-PLAN TECHNOLOGIQUE

Lorsqu'un conducteur de véhicule automobile roule de nuit, il arrive qu'il soit ébloui par les feux des voitures qu'il rencontre, ou par les lumières des lampadaires bordant la route.

Lorsqu'il roule avec les feux de route allumés (également appelés « plein-phares »), le conducteur peut également être ébloui par des éléments qui se trouvent dans le champ des phares et qui réfléchissent la lumière des feux de route dans la direction du conducteur.

Il a alors été développé des dispositifs permettant de réduire cet éblouissement. Ces dispositifs se présentent par exemple sous la forme de lunettes dont les verres s'obscurcissent en fonction d'un niveau d'éblouissement calculé.

Le calcul de ce niveau d'éblouissement est généralement effectué en prenant en compte la luminance de la source de lumière vue par une caméra équipant le véhicule automobile, et l'angle solide selon lequel la source de lumière est vue par cette caméra.

La luminance est par exemple estimée en fonction de la moyenne des codes couleurs associés aux pixels qui, sur l'image acquise par la caméra, correspondent à la source de lumière.

L'angle solide est quant à lui obtenu en fonction de la surface occupée par la source de lumière sur l'image acquise et en fonction du modèle de la caméra, qui tient compte de ses paramètres intrinsèques et extrinsèques à travers une calibration géométrique.

On constate alors que la détermination du niveau d'éblouissement suivant cette méthode s'avère efficace tant que la distance entre la caméra et la source de lumière reste réduite. Toutefois, lorsque cette distance s'accroît, le calcul du niveau d'éblouissement s'avère moins précis, si bien que le pilotage de l'obscurcissement des verres de lunettes s'avère moins fiable.

On constate notamment que, passé 20 mètres de distance entre la caméra et la source de lumière dans le cas où la caméra comporte un objectif grand angle, ou passé 100 mètres de distance dans le cas où la caméra comporte un objectif à focale plus longue, le calcul du niveau d'éblouissement n'est plus fiable.

La demanderesse a en effet compris que, tant que la source de lumière occupe une place importante sur l'image acquise, le calcul de l'angle solide peut être réalisé avec précision. En revanche, dès que cette place devient trop réduite (par exemple lorsque la source de lumière n'est représentée que par un seul pixel sur l'image acquise), ce calcul ne doit plus être considéré comme fiable.

Des documents de l'état de la technique pertinents sont, par exemple:

-    Yandan Lin et al: "Model predicting discomfort glare caused by LED road lights", Optics Express, vol.22, no.15, 18 juillet 2014, pages 18056-18071,
-    Kent B Christianson et al: "Methods to Address Headlight Glare", UCB-ITS-PRR-2009-20, mars 2009, pages 1-175,
-    FR 3 010 940 A1,
-    EP 2 479 064 A1,
-    EP 2 743 129 A1, et
-    US 5 426 294 A.

OBJET DE L'INVENTION

Afin de remédier à l'inconvénient précité de l'état de la technique, la présente invention propose une méthode permettant d'améliorer l'estimation du niveau d'éblouissement lorsque la distance entre la source de lumière et le véhicule automobile est élevée.

Plus particulièrement, on propose selon l'invention un procédé de détermination d'un niveau d'éblouissement tel que défini dans la revendication 1.

Ainsi, contrairement à la pratique usuelle, l'invention propose non pas d'améliorer l'algorithme d'estimation de la distance compte tenu de la forme de la source de lumière sur l'image acquise, mais au contraire de profiter de la présence sur le véhicule d'un autre type de détecteur pour déterminer avec une précision accrue la distance entre le véhicule et la source de lumière.

Elle propose notamment de profiter de ce détecteur lorsque la distance entre la source de lumière et le capteur d'images est supérieure à 20 mètres (dans le cas où le capteur d'images comporte un objectif grand angle) ou 100 mètres (dans le cas où le capteur d'images comporte un objectif à focale plus longue).

De cette façon, il est possible d'obtenir une bonne estimation de l'angle solide et par conséquent du niveau d'éblouissement, sans pour autant augmenter le coût du véhicule (pour autant bien sûr que ce véhicule soit déjà équipé d'un détecteur adapté à mesurer la distance souhaitée).

D'autres caractéristiques avantageuses et non limitatives du procédé conforme à l'invention sont proposées dans les revendications dépendantes 2 à 6.

L'invention comprend également un véhicule automobile selon la revendication 7.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique en perspective d'un véhicule automobile conforme à l'invention ;
- les figures 2 et 3 sont des représentations d'images pouvant être acquises par un capteur d'images équipant le véhicule automobile de la figure 1.

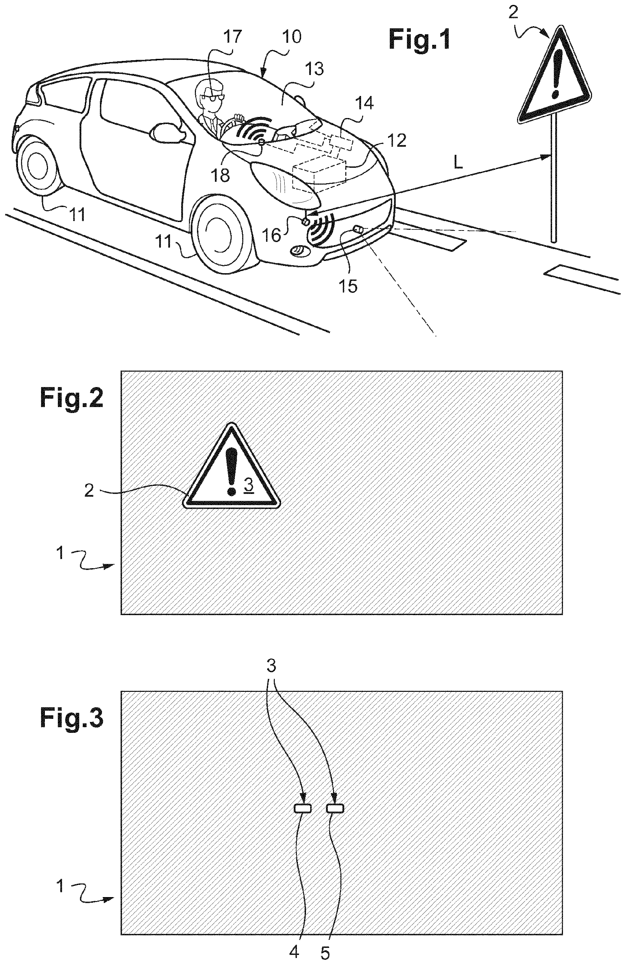

Sur la figure 1, on a représenté un véhicule automobile 10 qui se présente ici sous la forme d'une voiture à quatre roues 11. En variante, il pourrait s'agir d'un véhicule automobile comprenant deux ou trois roues, ou davantage de roues.

Classiquement, ce véhicule automobile 10 comporte un châssis qui supporte notamment un groupe motopropulseur 12 (à savoir un moteur et des moyens de transmission du couple du moteur aux roues motrices), des éléments de carrosserie et des éléments d'habitacle.

Le véhicule automobile 10 comprend également une unité électronique de commande (ou ECU, de l'anglais "Electronic Control Unit"), appelée ici calculateur 14.

Ce calculateur 14 comprend un processeur et une unité de mémorisation, par exemple une mémoire non-volatile réinscriptible ou un disque dur.

L'unité de mémorisation enregistre notamment des programmes d'ordinateur comprenant des instructions dont l'exécution par le processeur permet la mise en oeuvre par le calculateur du procédé décrit ci-après.

Pour la mise en oeuvre de ce procédé, le calculateur 14 est connecté à différents équipements du véhicule automobile 10.

Parmi ces équipements, le véhicule automobile 10 comprend au moins un capteur d'images 15 et un détecteur de distance 16. Il comporte ici en outre un moyen de communication 18 adapté à communiquer avec un microcontrôleur équipant une paire de lunettes 17 portée par le conducteur du véhicule.

On peut décrire plus en détails ces différents équipements.

Le capteur d'images est ici formé par une caméra 15 qui est orientée vers l'avant, de telle sorte qu'elle peut acquérir des images d'une portion de la route se trouvant à l'avant du véhicule. Il peut s'agir d'une caméra dite grand-angle (c'est-à-dire d'une caméra qui a un angle de vision plus large que la perception naturelle de l'œil humain) ou d'une caméra à focale longue (c'est-à-dire d'une caméra qui a un objectif dont la focale est plus grande que celle d'un objectif grand-angle).

Cette caméra 15 est ici représentée comme étant fixée dans le bouclier avant du véhicule. En variante, notamment si elle est de type « à focale longue », la caméra pourrait être située à l'arrière du pare-brise 13 du véhicule. Encore en variante, cette caméra pourrait être montée sur le véhicule de manière amovible. Il pourrait ainsi s'agir d'une caméra dite embarquée. Encore en variante, il pourrait s'agir de la caméra équipant le téléphone mobile du conducteur.

Quel que soit le mode de réalisation retenu, la caméra 15 devra être en mesure d'acquérir des images d'une portion de la route se trouvant à l'avant du véhicule et de communiquer des informations au calculateur 14 du véhicule.

Comme cela sera bien expliqué dans la suite de cet exposé, si la caméra peut être de tout type, il n'en demeure pas moins qu'il sera nécessaire de réaliser une calibration photométrique pour retrouver la correspondance entre le niveau de Luminance (cd/m$^2$) de la source lumineuse et les valeurs des pixels dans l'image afin d'obtenir des résultats comparables quelle que soit la caméra utilisée. Il faudra ainsi la calibrer en tenant compte du modèle de cette caméra, qui considère les paramètres intrinsèques et extrinsèques de cette caméra (notamment la position de cette caméra par rapport aux yeux du conducteur).

Le détecteur de distance 16 pourra également se présenter sous différentes formes et pourra être placé à divers endroits du véhicule. Il sera toutefois positionné de manière à pouvoir détecter des obstacles situés à l'avant du véhicule, dans le champ de vision de la caméra 15.

Ce détecteur de distance 16 sera de préférence conçu pour émettre des ondes vers l'avant du véhicule, pour détecter les ondes réfléchies par les obstacles se trouvant à l'avant du véhicule, et pour déterminer la distance entre le véhicule et ces obstacles, compte tenu du temps mis par les ondes pour revenir vers le détecteur de distance 16.

En pratique, ce détecteur de distance 16 pourra fonctionner selon l'une et/ou l'autre des technologies suivantes :

- LIDAR (acronyme de l'expression en langue anglaise « light détection and ranging », c'est-à-dire « détection et localisation par la lumière ») ; il pourra ainsi s'agir par exemple d'un télédétecteur laser ;
- SONAR (acronyme de l'expression en langue anglaise « sound navigation and ranging », c'est-à-dire « télémétrie et localisation par le son »), ou
- RADAR (acronyme de l'expression en langue anglaise « Radio Détection And Ranging », c'est-à-dire « détection et localisation par les ondes radio »).

La présente invention porte sur l'estimation d'un niveau d'éblouissement du conducteur en vue de réduire la gêne ressentie par le conducteur. Autrement formulé, la présente invention est prévue pour fournir un niveau d'éblouissement pouvant être utilisé afin de commander un moyen anti-éblouissement.

On pourrait ainsi par exemple prévoir que le pare-brise 13 soit équipé d'un film adapté à s'obscurcir au moins partiellement, sous le contrôle du calculateur 14. Le calculateur 14 pourrait ainsi piloter cet obscurcissement en fonction du niveau d'éblouissement détecté.

Ici, on considérera plutôt que le conducteur porte une paire de lunettes 17 dont les verres sont adaptés à s'obscurcir, sous le contrôle d'un microcontrôleur équipant cette paire de lunettes. Le calculateur pourra ainsi piloter l'obscurcissement des verres de lunettes en fonction du niveau d'éblouissement détecté, en commandant en conséquence le microcontrôleur via un moyen de communication 18 équipant le véhicule et via une antenne équipant la paire de lunettes.

Le véhicule automobile 10 est représenté sur la figure 1 comme roulant sur une route comportant différentes infrastructures, parmi lesquelles un panneau de signalisation 2 situé sur le bord de la route.

L'invention porte alors sur un procédé mis en oeuvre par le calculateur 14 du véhicule automobile 10 pour déterminer le niveau d'éblouissement provoqué par les sources de lumière éblouissant le véhicule automobile.

On considérera ici le cas où le véhicule automobile 10 roule de nuit.

Les sources de lumière considérées pourront alors présenter différentes formes. Il pourra ainsi notamment s'agir :

- des feux avant 4, 5 d'un véhicule circulant en sens inverse du véhicule automobile 10 considéré (voir figure 3) ;
- des feux arrière du véhicule précédant le véhicule automobile 10 considéré ;
- des éclairages publics bordant la route empruntée par le véhicule automobile 10 considéré ;
- des éléments 2 bordant la route empruntée par le véhicule automobile 10 considéré et réfléchissant vers le conducteur la lumière émise par les phares du véhicule automobile 10 considéré (voir figure 2).

Dans ce contexte, comme le montre la figure 1, on considérera ici que la source de lumière éblouissant le conducteur est formée soit par le panneau de signalisation 2 situé sur le bord de la route, soit par les feux avant 4, 5 d'un véhicule circulant en sens inverse.

Le calculateur 14 est alors conçu pour mettre en oeuvre un procédé de détermination du niveau d'éblouissement généré par ce panneau de signalisation 2 ou par ces feux avant 4, 5. Dans la suite, le panneau de signalisation 2 et les feux avant 4, 5 seront appelés « sources de lumière 2, 4, 5 ».

Le procédé de détermination comporte quatre étapes principales, dont :

- une étape d'acquisition par la caméra 15 d'une image 1 sur laquelle apparaît au moins une partie de la source de lumière 2, 4, 5,
- une étape d'identification sur ladite image 1 d'au moins une zone 3 correspondant à cette source de lumière 2, 4, 5,
- une étape d'estimation de l'angle solide ω selon lequel la source de lumière 2, 4, 5 est vue par le capteur d'images 15, et
- une étape de calcul dudit niveau d'éblouissement en fonction de l'angle solide ω.

A l'étape d'estimation, l'angle solide ω est calculé en fonction au moins de la distance L séparant la caméra 15 de la source de lumière 2, 4, 5.

Lors de cette étape d'estimation, selon une caractéristique particulièrement avantageuse de l'invention, la distance L est estimée en fonction des résultats de mesures effectuées par le détecteur 16. De cette manière, le calcul de l'angle solide s'avère très précis, ce qui réduit les risques d'erreur dans la détermination du niveau d'éblouissement du conducteur.

Les quatre étapes précitées sont exécutées régulièrement par le calculateur 14, à intervalles de temps réduits, de manière à obtenir en continu une bonne estimation du niveau d'éblouissement du conducteur.

On peut alors décrire plus en détail la manière selon les quatre étapes précitées sont exécutées.

Lors de la première étape, la caméra acquiert une image 1 d'une portion de la route située à l'avant du véhicule automobile 10.

Des exemples d'images 1 acquises sont par exemple représentés sur les figures 2 et 3. On observe sur ces images 1 que, puisque le véhicule roule de nuit, le panneau de signalisation 2 ou les feux avant 4, 5 ressortent clairement du reste de l'image (qui est ici représenté par simplification par un fond noir).

Au cours de la seconde étape, le calculateur 12 reçoit de la caméra 15 cette image 1, qu'il traite de manière à distinguer la ou les zone(s) 3 correspondant aux sources de lumière 2, 4, 5 du reste du fond.

Cette seconde étape peut être mise en oeuvre de différentes manières. Elle peut ainsi, à titre d'exemple, consister à appliquer un filtre à l'image, lequel fonctionne par seuillage.

Dans cet exemple, tous les pixels de l'image présentant un code couleur supérieur à un seuil sont considérés comme potentiellement éblouissants et sont distingués du fond de l'image. Ces pixels sont alors rassemblés en ensemble(s) de pixels connexes, chaque ensemble définissant une zone 3 au sens de l'invention. Sur la figure 2, l'image 1 ne comporte qu'une zone 3. Sur la figure 3, elle en comporte deux correspondant aux deux phares avant 4, 5 du véhicule circulant en sens inverse.

Au cours de la troisième étape, le calculateur 14 calcule une estimation de l'angle solide ω selon lequel la source de lumière 2, 4, 5 est vue par la caméra 15.

Il utilise pour cela la formule mathématique d'approximation suivante :

$$\omega = S' / L^2,$$

où

- ω est l'angle solide, et s'exprime en stéradians,
- S' est la surface réelle de la source de lumière, et s'exprime en mètres carrés, et
- L est la distance séparant le véhicule automobile 10 de la source de lumière, et s'exprime en mètres.

En pratique, le calculateur 14 calcule ici trois estimations de cet angle solide ω.

La première estimation de cet angle solide ω est calculée d'une manière déjà connue de l'état de la technique, en fonction de la place occupée par la source de lumière 2, 4, 5 sur l'image 1 acquise et en fonction du modèle de la caméra 15. Puisque cette méthode est déjà connue, elle ne sera pas ici décrite plus en détail.

La seconde estimation de cet angle solide ω sera calculée d'une nouvelle manière, en fonction des mesures réalisées par le détecteur de distance 16.

Pour cela, on utilise la formule mathématique précitée.

Dans cette formule, la distance L est directement obtenue par le détecteur de distance 16.

La surface S' correspond ici à la surface réelle du panneau de signalisation 2 (par opposition à la surface S de la zone 3 de l'image 1). Elle peut être obtenue de diverses manières.

Elle pourra par exemple être calculée simplement en fonction de la surface S occupée par la zone 3 sur ladite image 1 (exprimée en pixels) et de la distance L.

On constate toutefois que ce calcul est peu précis lorsque la source de lumière 2, 4, 5 occupe une place très réduite sur l'image 1 (car elle est éloignée du véhicule et/ou car la caméra est du type grand-angle).

On peut alors prévoir d'estimer la surface S' autrement, par exemple en déterminant la nature de la source de lumière 2 (panneau de signalisation, feux avant, feu arrière, ...) et en lisant dans une base de données la surface S' associée à cette nature de source de lumière 2.

Plus précisément, le calculateur peut avoir en mémoire une base de données associant à chaque nature de source de lumière une surface S' (par exemple 1,1 m² pour un panneau de signalisation triangulaire, 0,15 m² pour un feu avant de voiture, 0,1 m² pour un feu avant de voiture, ...).

Il suffira alors au calculateur 14 de déterminer la nature de la source de lumière pour en déduire sa surface S'.

Pour déterminer cette nature, le calculateur 14 pourra par exemple prendre en compte l'un et/ou l'autre des paramètres suivants :

- la forme de la source de lumière sur l'image 1,
- le nombre de sources de lumière voisines sur l'image 1,
- la couleur de la source de lumière sur l'image 1 (rouge pour les feux arrière, blanc pour les feux avant, ...),
- la fréquence de l'intensité d'éclairage de la source de lumière (cette dernière étant différente pour un phare de voiture et un luminaire bordant la route).

Encore en variante, la surface S' pourra être obtenue en mélangeant les deux solutions précitées.

A titre d'exemple, la première solution (qui consiste à déduire la surface S' de la surface S et de la distance L) pourra être choisie tant que la distance L est inférieure à un seuil.

En revanche, la seconde solution (qui consiste à utiliser une base de données) pourra être choisie lorsque la distance L dépasse ce seuil.

La troisième estimation de l'angle solide ω sera quant à elle calculée en fonction des résultats obtenus via la première et la seconde estimation de cet angle solide ω.

En effet, lors de ces deux estimations, la distance L aura été estimée, d'un côté, en fonction des données apparaissant sur l'image 1 acquise, et, de l'autre, en fonction des données reçues du détecteur de distance 16.

Pour la troisième estimation de l'angle solide ω, on pourra cette fois considérer une moyenne pondérée de la distance L obtenue au moyen de l'image 1 acquise et de la distance L obtenue au moyen du détecteur de distance 16.

Cette moyenne sera pondérée afin de tenir compte de la confiance qu'on accorde à la mesure effectuée par la caméra 15 et à celle qu'on accorde à la mesure effectuée par le détecteur de distance 16.

Ainsi sera-t-il possible d'accorder une plus grande confiance à la mesure effectuée par la caméra lorsque la distance L est réduite, et d'accorder une plus grande confiance à la mesure effectuée par le détecteur de distance 16 lorsque la distance L est plus grande.

Enfin, lors de la quatrième étape, le calculateur 14 détermine le niveau d'éblouissement B provoqué par la réflexion de la lumière issue des feux avant du véhicule automobile 10 sur le panneau de signalisation 2.

Pour cela, le calculateur opère ici le calcul suivant :

$$B = \frac{L^a \cdot \omega^b}{L_b{}^c \cdot \theta^d}$$

Avec :

- a, b, c et d quatre coefficients compris entre 0 et 1, et choisis ici respectivement égaux à 0,61 ; 0,25 ; 0,014 ; 0,26,
- L la luminance de la source de lumière 2, 4, 5 sur l'image 1,
- $L_b$ la luminance du fond de l'image 1,
- ω l'angle solide obtenu par l'une ou l'autre des trois estimations précitées, et
- θ l'angle entre l'axe optique de la caméra 15 (considéré par simplification comme correspondant à l'axe selon lequel le conducteur observe la route) et l'axe joignant la caméra et le centre de la source de lumière 2, 4, 5 considérée.

La luminance L peut par exemple être obtenue en faisant la moyenne des luminances des pixels de la zone 3 de l'image 1, c'est-à-dire en considérant les codes-couleur de ces pixels.

La luminance $L_b$ peut être obtenue de la même manière, en considérant la partie restante de l'image 1.

Toutefois, pour obtenir des résultats comparables quelle que soit la caméra 15 utilisée, il est nécessaire de calibrer cette caméra. Ce processus de calibration peut à titre d'exemple être réalisée en positionnant la caméra dans une chambre noire à l'intérieure de laquelle se trouve une source de lumière calibrée. Ainsi, en éclairant la caméra avec une intensité lumineuse (et une luminance) connue, il est possible d'associer cette intensité (ou cette luminance) à la mesure effectuée par la caméra.

L'angle θ est quant à lui obtenu compte tenu de deux phénomènes.

Le premier phénomène est celui selon lequel l'œil humain est plus ébloui lorsqu'il observe directement une source de lumière que lorsqu'il observe un point décalé par rapport à cette source de lumière. Pour tenir compte de ce phénomène, l'angle θ sera obtenu en fonction de la distance séparant, d'une part, le centre de l'image 1, et d'autre part, le centre de la zone 3 considérée de l'image 1.

Le second phénomène est celui selon lequel l'éblouissement ressenti au niveau de la caméra 15 n'est pas le même que celui ressenti par le conducteur, compte tenu du fait que la caméra n'est pas positionnée au niveau des yeux du conducteur. Cet angle θ sera alors obtenu en fonction également de la position de la caméra sur le véhicule.

Une fois le niveau d'éblouissement B obtenu, celui-ci peut être utilisé de diverses manières.

Dans le mode de réalisation illustré sur la figure 1, il est utilisé par le calculateur 14 pour déterminer une consigne d'obscurcissement des verres de la paire de lunettes 17 portée par le conducteur.

Le calculateur 14 est alors programmé pour communiquer cette consigne au microcontrôleur équipant la paire de lunettes 17, de manière que celui-ci commande en conséquence l'obscurcissement des verres de la paires de lunettes, ce qui évite au conducteur d'être ébloui.

En variante, dans le cas où l'éblouissement est dû à la réflexion de la lumière des phares du véhicule considéré sur le panneau de signalisation 2, on pourrait prévoir que le calculateur 14 communique aux phares une consigne de diminution de leur intensité lumineuse (ou, si les phares sont mobiles, une consigne de modification de la direction d'éclairage des phares).

## Revendications

1. Procédé de détermination d'un niveau d'éblouissement (B) provoqué par une source de lumière (2) illuminant un conducteur d'un véhicule automobile (10) ledit véhicule automobile comprenant un capteur d'images (15) et un détecteur de distance (16) ledit détecteur de distance (16) étant distinct dudit capteur d'images (15), comportant des étapes de :

   - acquisition d'une image (1) par ledit capteur d'images (15), sur laquelle apparaît au moins une partie de ladite source de lumière (2),
   - estimation d'une distance (L) séparant le véhicule automobile (10) de ladite source de lumière (2), et
   - calcul dudit niveau d'éblouissement (B) en fonction de ladite distance (L),

   **caractérisé en ce que**, à l'étape d'estimation, ladite distance (L) est estimée compte tenu de résultats de mesures effectuées au moyen dudit détecteur de distance (16), dans lequel, à l'étape d'estimation, une surface (S) occupée par ladite source de lumière (2) sur ladite image (1) est estimée, et, à l'étape de calcul, ledit niveau d'éblouissement (B) est calculé en fonction également de ladite surface (S) et dans lequel, à l'étape de calcul,:

   - une première estimation de l'angle solide (ω) selon lequel la source de lumière (2) est vue par le capteur d'images (15) est déterminée, en fonction de ladite distance (L), puis
   - une première estimation du niveau d'éblouissement (B) en fonction de la première estimation dudit angle solide (ω) est déterminée.

2. Procédé de détermination selon la revendication 1, dans lequel, à l'étape de calcul, :

   - une autre estimation de l'angle solide (ω) est déterminée compte tenu uniquement de l'image (1) acquise et du modèle du capteur d'images (15), puis de

- une autre estimation du niveau d'éblouissement (B) est déterminée en fonction de ladite autre estimation de l'angle solide ($\omega$).

3. Procédé de détermination selon la revendication 1, dans lequel, à l'étape de calcul, :

     - une autre estimation de l'angle solide ($\omega$) est déterminée compte tenu, d'une part, de ladite distance (L), et, d'autre part, d'une évaluation de ladite distance obtenue en fonction de l'image (1) acquise et du modèle du capteur d'images (15), puis
     - une autre estimation du niveau d'éblouissement (B) est déterminée en fonction de ladite autre estimation de l'angle solide ($\omega$).

4. Procédé de détermination selon l'une des revendications précédentes, dans lequel, préalablement à ladite étape d'estimation, ledit procédé comporte une étape d'identification sur ladite image (1) d'une zone correspondant à ladite source de lumière (2).

5. Procédé de détermination selon l'une des revendications précédentes, dans lequel, à l'étape de calcul, ledit niveau d'éblouissement (B) est calculé en fonction de la luminance de la source de lumière (2) sur l'image (1).

6. Procédé de détermination selon l'une des revendications précédentes, dans lequel ladite distance (L) est estimée par le détecteur (16) au moyen d'une technique de détection par RADAR ou par LIDAR.

7. Véhicule automobile (10) comportant :

     - un capteur d'images (15) dirigé vers l'avant du véhicule automobile (10),
     - un détecteur de distance (16) adapté à mesurer une distance (L) séparant le véhicule automobile (10) d'une source de lumière (2) illuminant un conducteur du véhicule automobile (10), ledit détecteur de distance (16) étant distinct dudit capteur d'images (15) et
     - un calculateur (14) adapté à communiquer avec le capteur d'images (15) et le détecteur (16),

**caractérisé en ce que** le calculateur (14) est adapté à mettre en oeuvre un procédé de détermination d'un niveau d'éblouissement (B) provoqué par la source de lumière (2) conforme à l'une des revendications précédentes.

**Patentansprüche**

1. Bestimmungsverfahren eines von einer einen Fahrer eines Kraftfahrzeugs (10) anleuchtenden Lichtquelle (2) verursachten Blendungsgrads (B), wobei das Kraftfahrzeug einen Bildsensor (15) und einen Abstandsdetektor (16) enthält, wobei der Abstandsdetektor (16) sich vom Bildsensor (15) unterscheidet, das die folgenden Schritte aufweist:

     - Erfassung eines Bilds (1) durch den Bildsensor (15), auf dem mindestens ein Teil der Lichtquelle (2) erscheint,
     - Schätzung eines das Kraftfahrzeug (10) von der Lichtquelle (2) trennenden Abstands (L), und
     - Berechnung des Blendungsgrads (B) abhängig vom Abstand (L),

**dadurch gekennzeichnet, dass** im Schätzschritt der Abstand (L) unter Berücksichtigung der Ergebnisse der mittels des Abstandsdetektors (16) ausgeführten Messungen geschätzt wird, wobei im Schätzschritt eine von der Lichtquelle (2) auf dem Bild (1) eingenommene Fläche (S) geschätzt wird, und im Rechenschritt der Blendungsgrad (B) ebenfalls abhängig von der Fläche (S) berechnet wird, und wobei im Rechenschritt:

     - eine erste Schätzung des Raumwinkels ($\omega$), gemäß dem die Lichtquelle (2) vom Bildsensor (15) gesehen wird, abhängig vom Abstand (L) bestimmt wird, dann
     - eine erste Schätzung des Blendungsgrads (B) abhängig von der ersten Schätzung des Raumwinkels ($\omega$) bestimmt wird.

2. Bestimmungsverfahren nach Anspruch 1, wobei im Rechenschritt:

     - eine weitere Schätzung des Raumwinkels ($\omega$) unter Berücksichtigung nur des erfassten Bilds (1) und des Modells des Bildsensors (15) bestimmt wird, dann
     - eine weitere Schätzung des Blendungsgrads (B) abhängig von der weiteren Schätzung des Raumwinkels ($\omega$) bestimmt wird.

3. Bestimmungsverfahren nach Anspruch 1, wobei im Rechenschritt:

     - eine weitere Schätzung des Raumwinkels ($\omega$) unter Berücksichtigung einerseits des Abstands (L) und andererseits einer Bewertung des Abstands bestimmt wird, die abhängig vom erfassten Bild (1) und vom Modell des Bildsensors (15) erhalten wird, dann
     - eine weitere Schätzung des Blendungsgrads (B) abhängig von der weiteren Schätzung des Raumwinkels ($\omega$) bestimmt wird.

**4.** Bestimmungsverfahren nach einem der vorhergehenden Ansprüche, wobei das Verfahren vor dem Schätzschritt einen Schritt der Erkennung einer der Lichtquelle (2) entsprechenden Zone im Bild (1) aufweist.

**5.** Bestimmungsverfahren nach einem der vorhergehenden Ansprüche, wobei im Rechenschritt der Blendungsgrad (B) abhängig von der Leuchtdichte der Lichtquelle (2) im Bild (1) berechnet wird.

**6.** Bestimmungsverfahren nach einem der vorhergehenden Ansprüche, wobei der Abstand (L) vom Detektor (16) mittels einer Erkennungstechnik durch RADAR oder durch LIDAR geschätzt wird.

**7.** Kraftfahrzeug (10), das aufweist:

    - einen Bildsensor (15), der zur Vorderseite des Kraftfahrzeugs (10) gerichtet ist,
    - einen Abstandsdetektor (16), der geeignet ist, einen das Kraftfahrzeug (10) von einer einen Fahrer des Kraftfahrzeugs (10) anleuchtenden Lichtquelle (2) trennenden Abstand (L) zu messen, wobei der Abstandsdetektor (16) sich vom Bildsensor (15) unterscheidet, und
    - einen Rechner (14), der geeignet ist, mit dem Bildsensor (15) und dem Detektor (16) zu kommunizieren,

**dadurch gekennzeichnet, dass** der Rechner (14) geeignet ist, ein Bestimmungsverfahren eines von der Lichtquelle (2) verursachten Blendungsgrads (B) gemäß einem der vorhergehenden Ansprüche durchzuführen.

**Claims**

**1.** Method for determining a glare level (B) caused by a light source (2) illuminating a driver of a motor vehicle (10), said motor vehicle comprising an image sensor (15) and a distance detector (16), said distance detector (16) being distinct from said image sensor (15), comprising steps of:

    - said image sensor (15) acquiring an image (1), in which at least part of said light source (2) appears,
    - estimating a distance (L) separating the motor vehicle (10) from said light source (2), and
    - computing said glare level (B) as a function of said distance (L),
    **characterized in that**, in the estimation step, said distance (L) is estimated taking into account results of measurements carried out by means of said distance detector (16),
    in which, in the estimation step, an area (S) occupied by said light source (2) in said image (1) is estimated and, in the computation step, said glare level (B) is computed also as a function of said area (S) and
in which, in the computation step:

    - a first estimate of the solid angle ($\omega$) at which the light source (2) is seen by the image sensor (15) is determined, as a function of said distance (L), then
    - a first estimate of the glare level (B) as a function of the first estimate of said solid angle ($\omega$) is determined.

**2.** Determination method according to Claim 1, in which, in the computation step:

    - another estimate of the solid angle ($\omega$) is determined taking into account only the image (1) acquired and the model of the image sensor (15), then
    - another estimate of the glare level (B) is determined as a function of said other estimate of the solid angle ($\omega$).

**3.** Determination method according to Claim 1, in which, in the computation step:

    - another estimate of the solid angle ($\omega$) is determined taking into account, on the one hand, said distance (L) and, on the other hand, an evaluation of said distance obtained as a function of the image (1) acquired and of the model of the image sensor (15), then
    - another estimate of the glare level (B) is determined as a function of said other estimate of the solid angle ($\omega$).

**4.** Determination method according to one of the preceding claims, in which, prior to said estimation step, said method comprises a step of identifying, in said image (1), a region corresponding to said light source (2).

**5.** Determination method according to one of the preceding claims, in which, in the computation step, said glare level (B) is computed as a function of the luminance of the light source (2) in the image (1).

**6.** Determination method according to one of the preceding claims, in which said distance (L) is estimated by the detector (16) by means of a radar or lidar detection technique.

**7.** Motor vehicle (10) comprising:

    - an image sensor (15) directed towards the front of the motor vehicle (10),

- a distance detector (16) adapted to measure a distance (L) separating the motor vehicle (10) from a light source (2) illuminating a driver of the motor vehicle (10), said distance detector (16) being distinct from said image sensor (15) and
- a computer (14) adapted to communicate with the image sensor (15) and the detector (16),

**characterized in that** the computer (14) is adapted to implement a method for determining a glare level (B) caused by the light source (2) in accordance with one of the preceding claims.

**Fig.1**

**Fig.2**

**Fig.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3010940 A1
- EP 2479064 A1
- EP 2743129 A1
- US 5426294 A

**Littérature non-brevet citée dans la description**

- **YANDAN LIN et al.** Model predicting discomfort glare caused by LED road lights. *Optics Express,* 18 Juillet 2014, vol. 22 (15), 18056-18071
- **KENT B CHRISTIANSON et al.** Methods to Address Headlight Glare. *UCB-ITS-PRR-2009-20,* Mars 2009, 1-175